# EUROPÄISCHE PATENTSCHRIFT

(11) **EP 0 396 989 B1**
(45) Veröffentlichungstag und Bekanntmachung des Hinweises auf die Patenterteilung: **14.12.1994**
(21) Anmeldenummer: 90108153.9
(22) Anmeldetag: 28.04.1990
(51) Int. Cl.: C08G 18/69, C08G 18/30, C08K 3/22, C09D 175/14

(54) **Verfahren zur Herstellung von hochelastischen Polyurethan- kunststoffen und -beschichtungen**
Process for the preparation of high-elastic polyurethane resins and coatings
Procédé de préparation de résines de polyuréthane et de revêtements hautement élastiques

(30) Priorität: 11.05.1989 DE 3915426
(43) Veröffentlichungstag der Anmeldung: 14.11.1990
(73) Patentinhaber: BAYER AG, 51368 Leverkusen (DE)
(72) Erfinder: Fehlbier, Alois, Dipl.-Ing., D-5093 Burscheid (DE); Gruber, Hermann, Dr., D-5090 Leverkusen 1 (DE)

(56) Entgegenhaltungen:
- EP-A- 0 161 479
- FR-A- 1 139 630
- GB-A- 1 147 695
- Advances in Urethane Science and Technology, Vol.8 (1981), Technomic Publishing Co.

## Beschreibung

Die Erfindung betrifft ein neues Verfahren zur Herstellung von hochelastischen Polyurethanen, insbesondere Beschichtungen auf Polyurethanbasis von Oberflächen unter Verwendung eines Beschichtungsmittels auf Basis von organischen Polyisocyanaten, organischen Verbindungen mit alkoholischen Hydroxylgruppen, Wasser, sowie organischen und anorganischen Hilfs-und Zusatzmitteln, wobei als organische Polyhydroxylverbindungen bestimmte, endständige Hydroxylgruppen aufweisende Polybutadienharze und als anorganische Hilfs- und Zusatzmittel Hydroxide bzw. Oxide von Erdalkalimetallen mitverwendet werden.

Die Verwendung von Hydroxiden oder Oxiden von Erdalkalimetallen bei der Herstellung von nicht-geschäumten Polyurethankunststoffen unter Verwendung von wasserhaltigen Reaktivsystemen auf Basis von organischen Polyisocyanaten und organischen Verbindungen mit gegenüber Isocyanatgruppen reaktionsfähigen Gruppen ist bereits bekannt. So beschreibt beispielsweise die DE-PS 1 170 627 die Wirkung von Kalziumoxid als wasserentziehendes Mittel in Polyurethan-Systemen. Die GB-PS 1 147 695 beschreibt u.a. die Verwendung von Kalziumhydroxid in derartigen wasserhaltigen Reaktivsystemen bei der Herstellung von nicht-geschäumten Polyurethankunststoffen. Weiterhin wurden hydraulische Zemente zur Schaumverhinderung in wasserhaltigen Polyurethansystemen herangezogen (vgl. z.B. DE-OS 2 113 046, DE-OS 2 254 251, DE-OS 2 113 042, DE-OS 2 300 206 oder DE-AS 1 924 468). Die oftmals hochelastischen Systeme dieser Vorveröffentlichungen sind mit dem Nachteil einer nur unzureichenden Wasserfestigkeit behaftet, der auch nicht durch Zusatz von Bitumen beseitigt werden kann, da die Verträglichkeit der Systeme mit Bitumen unzureichend ist.

Die Beschichtungsmassen der DE-OS 3 414 807 führen ihrerseits zu sehr harten Beschichtungen, die für viele Anwendungszwecke eine nur unzureichende Elastizität aufweisen.

Es war daher die der Erfindung zugrundeliegende Aufgabe, die bekannten Verfahren zur Herstellung von hochelastischen Kunststoffen, insbesondere von hochelastischen Oberflächenbeschichtungen auf Basis von Wasser und anorganische Füllstoffe enthaltenden Polyurethansystemen so zu verbessern, daß die zum Einsatz gelangenden Reaktivsysteme die Herstellung von Kunststoffen, insbesondere von Beschichtungen gestatten, die bezüglich ihrer Elastizität und ihrer sonstigen Eigenschaften den entsprechenden Systemen des Standes der Technik mindestens ebenbürtig sind, außerdem jedoch eine verbesserte Wasserresistenz und insbesondere Bitumenverträglichkeit aufweisen.

Die Aufgabe konnte mit der Bereitstellung der nachstehend näher beschriebenen erfindungsgemäßen Verfahren gelöst werden.

Gegenstand der Erfindung ist ein Verfahren zur Herstellung von Polyurethankunststoffen durch Umsetzung
a) einer Polyisocyanatkomponente mit
b) einer Polyolkomponente und
c) Wasser
in Gegenwart von
d) anorganischen Hilfs- und Zusatzstoffen und gegebenenfalls
e) organischen Hilfs- und Zusatzstoffen mit Ausnahme von Glycerin
dadurch gekennzeichnet, daß man
a) die Polyisocyanatkomponente in einer Menge einsetzt, die einer Isocyanatkennzahl von mindestens 50 entspricht,
b) als Polyolkomponente im wesentlichen ein flüssiges, endständige Hydroxylgruppen aufweisendes Polybutadienharz des Molekulargewichtsbereichs 500 bis 10000 verwendet, wobei die Mitverwendung von Glycerin als Teil der Komponente b) ausgeschlossen ist,
c) das Wasser in einer Menge von 10 bis 50 Gew.-%, bezogen auf des Gewicht der Komponente b) verwendet und
d) als anorganische Hilfs- und Zusatzstoffe mindestens ein Erdalkalimetallhydroxid oder - oxid, gegebenenfalls in Form von Zementen, in einer Menge von 20 bis 500 Gew.-%, bezogen auf des Gewicht der Komponente b), gegebenenfalls neben weiteren anorganischen Hilfs- und Zusatzmitteln verwendet.

Gegenstand der Erfindung ist auch ein Verfahren zur Herstellung von chemikalienbeständigen, hochelastischen Polyurethanbeschichtungen von Oberflächen unter Verwendung eines Beschichtungsmittels, welches aus den genannten Komponenten a) bis d) und gegebenenfalls e) besteht.

Als Polyisocyanatkomponente a) eignen sich beliebige, bei Raumtemperatur flüssige organische Polyisocyanate, wie z.B. flüssige Polyisocyanate auf Basis von Diisocyanato-diphenylmethan, d.h. flüssige Gemische von 4,4'-Diisocyanatodiphenylmethan mit 2,4'-Diisocyanatodiphenylmethan, flüssige Derivate von 4,4'-Diisocyanatodiphenylmethan und gegebenenfalls 2,4'-Diisocyanatodiphenylmethan wie z.B. deren Umsetzungsprodukte mit unterschüssigen Mengen an mehrwertigen Alkoholen, insbesondere an Polypropylenglykolen mit einem Molekulargewicht bis zu 700 oder die Carbodiimid-modifizierten Derivate dieser Diisocyanate, Tris-(isocyanatohexyl)-isocyanurat bzw. seine Gemische mit seinen höheren Homologen, Tris-(isocyanatohexyl)-biuret bzw. dessen Gemische mit seinen höheren Homologen oder flüssige niedermolekulare NCO-Prepolymere auf Basis von 2,4- und/oder 2,6-Diisocyanatotoluol. Bevorzugt werden jedoch Polyisocyanatgemische der Diphenylmethanreihe, wie sie durch Phosgenierung von Anilin/Formaldehyd-Kondensation zugänglich sind, und die bei 23°C eine Viskosität von 50 bis 400 mPa.s aufweisen, als Polyisocyanatkomponente a) verwendet. Beliebige Gemische der beispielhaft genannten Polyisocyanate können selbstverständlich auch eingesetzt werden. Die Polyisocyanatkomponente a) wird in solchen Mengen eingesetzt, die einer Isocyanatkennzahl von mindestens 50, vorzugsweise von 80 bis 200 entspricht. Unter "Isocyanatkennzahl" ist hierbei die Anzahl der Isocyanatgruppen pro 100 gegenüber Isocyanatgruppen reaktionsfähigen Gruppen zu verstehen, wobei Wasser als bifunktionelle Verbindung in die Berechnung eingeht.

Bei der Polyolkomponente b) handelt es sich um mindestens zwei, vorzugsweise zwei endständige alkoholische Hydroxylgruppen aufweisende, flüssige Polybutadienharze eines (aus dem Hydroxylgruppengehalt und der Hydroxylfunktionalität berechenbaren) Molekulargewichts von 500 bis 10 000, vorzugsweise 700 bis 5000 und besonders bevorzugt 2000 bis 4000. Gut geeignet als Komponente b) sind beispielsweise die von der Firma ARCO Chemical Company unter der Bezeichnung Poly bd® Resins vertriebenen Polybutadienharze.

Bei der Komponente c) handelt es sich um Wasser, welches in einer Menge von 10 bis 50 Gew.-%, vorzugsweise 10 bis 20 Gew.-%, bezogen auf das Gewicht der Komponente b) zum Einsatz gelangt.

Als wesentliche anorganische Hilfs- und Zusatzstoffe d), die gegebenenfalls neben weiteren anorganischen Hilfs-und Zusatzstoffen zur Anwendung gelangen, sind Hydroxide und Oxide von Erdalkalimetallen zu nennen. Geeignete Hydroxide bzw. Oxide von Erdalkalimetallen sind insbesondere Magnesiumoxid, Magnesiumhydroxid, Kalziumoxid oder Kalziumhydroxid. Besonders bevorzugt wird Kalziumhydroxid eingesetzt. Diese Hydroxide bzw. Oxide gelangen in Mengen von 20 bis 500 Gew.-%, vorzugsweise 50 bis 100 Gew.-%, bezogen auf das Gewicht der Komponente b) zum Einsatz. Die Erdalkalimetallhydroxide bzw. -oxide können auch in Form von anorganischen Zusatzstoffen zum Einsatz gelangen, die wesentliche Mengen dieser anorganischen Verbindungen enthalten. Hierzu gehören insbesondere Zemente, beispielsweise Portlandzement oder Hochofenzement.

Zu den bevorzugten organischen Hilfs- und Zusatzmitteln e), die gegebenenfalls neben weiteren organischen Hilfs- und Zusatzmitteln eingesetzt werden, gehören bituminöse Stoffe wie Bitumenöle oder Erdölbitumina, die gegebenenfalls in Weichmacher gelöst zum Einsatz gelangen. Diese bituminösen Stoffe können in Mengen von bis zu 500 Gew.-%, vorzugsweise bis zu 400 Gew.-%, insbesondere 10 bis 100 Gew.-%, bezogen auf das Gewicht der Komponente b) zum Einsatz gelangen.

Bei den sonstigen, gegebenenfalls mitzuverwendenden anorganischen Hilfs- und Zusatzmitteln handelt es sich beispielsweise um mineralische Zusatzstoffe wie Quarzmehl, Bariumsulfat und/oder Kalziumcarbonat, anorganlsche Pigmente, Ruß, Graphit oder Koksgrieß. Die letztgenannten beiden Zusatzstoffe führen bereits in geringen Mengen zu Beschichtungen, für welche der für elektrisch leitfähige Beschichtungen erforderliche Widerstandswert von 10⁶Ω unterschritten werden kann. Die genannten mineralischen Füllstoffe können in bis zu 40-fachen Mengen, bezogen auf das Gewicht der Komponente b) mitverwendet werden.

Bei den sonstigen gegebenenfalls mitzuverwendenden organischen Hilfs- und Zusatzmitteln handelt es sich beispielsweise um
- Weichmacheröle wie z.B. Alkansulfonsäurephenylester, hergestellt durch Sulfochlorierung von Alkanen bzw. Alkangemischen mit 10 bis 18 Kohlenstoffatomen und anschließende Veresterung mit Phenol, Dibutylphthalat oder Tributylphosphat bzw. andere Weichmacheröle, wie sie gemäß Stand der Technik beispielsweise bei der Herstellung von weichgemachtem Polyvinylchlorid Verwendung finden. Diese Weichmacheröle gehören ebenfalls zu den besonders bevorzugten organischen Hilfs- und Zusatzmiteln und können in Mengen von bis zu 150 Gew.-%, vorzugsweise 10 bis 120 Gew.-%, bezogen auf das Gewicht der Komponente b) eingesetzt werden.
- Emulgatoren, vorzugsweise nicht-ionische Emulgatoren wie z.B. technische Ethoxylierungsprodukte von Alkylphenolen, insbesondere von iso-Nonylphenol, die in Mengen von bis zu 20, vorzugsweise bis zu 15 Gew.-%, bezogen auf das Gewicht der Komponente b), eingesetzt werden können.
- Entschäumungsmittel der üblichen Art, die in geringen Mengen mitverwendet werden können.
- Elastische organische Füllstoffe wie beispielsweise Gummimehle.

Glyzerin wird bei der Herstellung der erfindungsgemäßen Reaktivsysteme nicht mitverwendet, d.h., es handelt sich bei diesen Reaktivsystemen um Glyzerin-freie Gemische.

Grundsätzlich können die beispielhaft genannten Einzelkomponenten bei der Herstellung der erfindungsgemäßen Beschichtungsmassen in beliebiger Reihenfolge miteinander vermischt werden. Vorzugsweise wird jedoch so vorgegangen, daß die Komponente b) zunächst mit den organischen Hilfs- und Zusatzmitteln (Emulgatoren, Weichmacheröle und sonstige Hilfsmittel) vermischt wird, worauf die anorganischen Bestandteile eingerührt werden. Dann wird das Wasser eindispergiert und das ganze mit der Polyisocyanatkomponente abgemischt. Die Herstellung der Reaktivsysteme erfolgt im allgemeinen bei Raumtemperatur.

Sie eignen sich zur Herstellung von bzw. als Folien, Vergußmassen, Abdichtungen oder zur Herstellung von elastischen Belägen, insbesondere Fußbodenbelägen, oder auch zur Herstellung von Fugenschichten bei der Verlegung von keramischen Platten. Besonders bevorzugt werden die erfindungsgemäßen Reaktivsysteme jedoch als Beschichtungsmittel für die Beschichtung beliebiger Substrate verwendet. Sie können in der üblichen Weise, z.B mit Rollen oder Spachtelgeräten verarbeitet und nach ca. 24 Stunden beansprucht werden. Sie eignen sich insbesondere auch zur Beschichtung von feuchten Betonflächen. Die ausgehärteten Beschichtungen weisen eine ausgezeichnete Elastizität und Wasserresistenz auf. Aufgrund ihrer hohen Elastizität eignen sie sich besonders gut für flächige Abdichtungen auf rißgefährdeten Betonflächen und zur Herstellung von flüssigkeitsdichten Beschichtungen im Industriebereich. Eine besonders interessante Anwendung für die erfindungsmäßen Reaktivsysteme betrifft die Abdichtung von Stahlkonstruktionen wie z.B. Garagendecks oder Brücken, die unter dem Einfluß von Tausalzlösungen und anderen bauschädlichen Stoffen korrosionsgefärdet sind. Unter Anwendung des erfindungsgemäßen Verfahrens wird eine elastische Membranbeschichtung erzeugt, die nach der Aushärtung mit der herkömmlichen bitumengebundenen Verschlußschicht abgedeckt werden kann. Das Auftragen der Verschlußschicht kann problemlos auch bei höherer Temperatur erfolgen.

Die nachstehenden Beispiele dienen zur weiteren Erläuterung des erfindungsgemäßen Verfahrens. Alle Prozentangaben beziehen sich auf Gewichtsprozente.

### Beispiel 1

a) In einem Rührkessel werden 550 Gew.-Teile eines hydroxylterminierten Polybutadienharzes des Molekulargewichts 2800 und der OH-Zahl 46,6 (Poly bd® Resins R-45HT der Firma ARCO Chemical Company) vorgelegt und zusammen mit 3,3 Gew.-Teilen eines handelsüblichen Entlüftungsmittels (®Byk 066 der Firma Byk-Chemie GmbH D-4230 Wesel) und 33,3 Gew.-Teilen einer wäßrigen Lösung eines handelsüblichen Emulgators (ethoxyliertes Isononylphenol, ®Marlophen der Firma Chemische Werke Hüls AG) während 10 Minuten in einem Dissolver bei einer Umdrehungsgeschwindigkeit von 1000 U/min dispergiert. Nach Zugabe von 180 Gew.-Teilen eines Phenylesters einer technischen C₁₂-C₁₈-Alkansulfonsäure (Weichmacher) und 2 Gew.-Teilen eines handelsüblichen Dispergiermittels (®Byk-P104 der Firma Byk-Chemie GmbH) wird während eines Zeitraums von 10 Minuten weiter dispergiert.
Anschließend werden 170 Gew.-Teile Kalziumhydroxid eingebracht und bei 1000 U/min eindispergiert. Nach 10 Minuten werden 60 Gew.-Teile Wasser hinzugefügt und während weiteren 15 Minuten bei 1000 U/min weiter dispergiert. Man erhält so eine lagerstabile Emulsion der Viskosität 6000 mPa.s/23°C.
b) 100 Gew.-Teile der gemäß 1a) hergestellten Emulsion werden mit 10 Gew.-Teilen eines Polyisocyanatgemischs der Diphenylmethanreihe mit einem NCO-Gehalt von 31 % und einer Viskosität von 120 mPa.s/23°C bei 23°C vermischt (NCO-Kennzahl = 150). In das so erhaltene Zweikomponenten-System wird schließlich noch ein Füllstoff (100 Gew.-Teile Schwerspat) homogen eingemischt.
Die gebrauchsfertige Mischung weist eine selbstverlaufende Konsistenz auf und wird mit Hilfe einer Glättkelle auf eine Betonfläche aufgetragen. Die Betonoberfläche wurde vorher mit einer 60-gew.-%igen Lösung in Xylol eines NCO-Prepolymeren mit einem NCO-Gehalt (bezogen auf Feststoff) von 16 Gew.-% grundiert. Das NCO-Prepolymer wurde durch Umsetzung von (i) einem Polyisocyanatgemisch der Diphenylmethanreihe, welches überwiegend aus 4,4′-Diisocyanatodiphenylmethan besteht, mit (ii) einem Gemisch aus gleichen Gewichtsteilen Polypropylenglykol des Molekulargewichts 2000 und eines Polyetherpolyols des Molekulargewichts 3700, hergestellt durch Anlagerung von Propylenoxid an Ethylendiamin, hergestellt.
Die Verarbeitungszeit der in einer Schichtdicke von ca. 2 mm aufgetragenen Beschichtungsmasse liegt bei ca. 40 Minuten (23°C). Die elastische Beschichtung härtet störungsfrei aus und weist folgende mechanische Eigenschaften auf:

| | |
|---|---|
| Zugfestigkeit (DIN 53 504): | 1,5 mPa |
| Bruchdehnung (DIN 53 504): | 185 % |
| Weiterreißfestigkeit (DIN 53 515): | 5,5 N/mm |
| Shore Härte A (DIN 53 505): | 50 |

### Beispiel 2

Beispiel 1b) wird wiederholt mit dem Unterschied, daß vor dem Einarbeiten des Füllstoffs 50 Gew-Teile Bitumen (®Spramex 200 der Firma Deutsche Shell AG) in die Emulsion homogen eingerührt werden. Die Emulsion ist mit dem Bitumen verträglich und über mehrere Monate lagerstabil. Nach Zugabe des Füllstoffs und des Polyisocyanats wird eine Beschichtungsmasse mit einer Verarbeitungszeit von 50 Minuten (23°C) erhalten.

Die ausgehärtete Beschichtung weist folgende Eigenschaften auf:

| | |
|---|---|
| Zugfestigkeit (DIN 53 504): | 1,2 mPa |
| Bruchdehnung (DIN 53 504): | 300 % |
| Weiterreißfestigkeit (DIN 53 515): | 5,0 N/mm |
| Shore Härte A (DIN 53 505): | 45 |

## Patentansprüche

1. Verfahren zur Herstellung von hochelastischen Polyurethankunststoffen durch Umsetzung
a) einer Polyisocyanatkomponente mit
b) einer Polyolkomponente und
c) Wasser
in Gegenwart von
d) anorganischen Hilfs- und Zusatzstoffen und gegebenenfalls
e) organischen Hilfs- und Zusatzstoffen mit Ausnahme von Glycerin
dadurch gekennzeichnet, daß man
a) die Polyisocyanatkomponente in einer Menge einsetzt, die einer Isocyanatkennzahl von mindestens 50 entspricht,
b) als Polyolkomponente im wesentlichen ein flüssiges, endständige Hydroxylgruppen aufweisendes Polybutadienharz des Molekulargewichtsbereichs 500 bis 10.000 verwendet, wobei die Mitverwendung von Glycerin als Teil der Komponente b) ausgeschlossen ist,
c) das Wasser in einer Menge von 10 bis 50 Gew.-%, bezogen auf das Gewicht der Komponente b) verwendet und
d) als anorganische Hilfs- und Zusatzstoffe mindestens ein Erdalkalimetallhydroxid oder -oxid, gegebenenfalls in Form von Zementen, in einer Menge von 20 bis 500 Gew.-%, bezogen auf das Gewicht der Komponente b), gegebenenfalls neben weiteren anorganischen Hilfs- und Zusatzmitteln verwendet.

2. Verfahren zur Herstellung von Beschichtungen aus Polyurethankunststoffen gemäß Anspruch 1.

3. Verfahren gemaß Anspruch 1 oder 2, dadurch gekennzeichnet, daß man
e) als organische Hilfs- und Zusatzstoffe bituminöse Zusatzstoffe in einer Menge von bis zu 500 Gew.-%, bezogen auf das Gewicht der Komponente b),gegebenenfalls neben weiteren organischen Hilfs- und Zusatzstoffen verwendet.

4. Verfahren gemäß Anspruch 1 bis 3, dadurch gekennzeichnet, daß man als Polyisocyanatkomponente a) ein Polyisocyanatgemisch der Diphenylmethanreihe verwendet.

5. Verfahren gemäß Anspruch 1 bis 4, dadurch gekennzeichnet, daß man als zusätzliche anorganische Hilfs- und Zusatzmittel d) Sand, Kies, Pigmente, Ruß und/oder Graphit verwendet.

## Claims

1. Process for the manufacture of highly elastic polyurethane plastics by reaction of
a) a polyisocyanate component with
b) a polyol component and
c) water
in presence of
d) inorganic auxiliary substances and additives and optionally
e) organic auxiliary substances and additives with the exception of glycerol,
characterized in that
a) the polyisocyanate component is used in an amount that corresponds to an isocyanate characteristic number of at least 50,
b) essentially a liquid polybutadiene resin having terminal hydroxyl groups and of a molecular weight in the range 500 to 10,000 is used as polyol component, the co-use of glycerol as a part of component b) being excluded,
c) the water is used in an amount of 10 to 50 wt%, based on the weight of component b),
d) at least one alkaline earth metal hydroxide or oxide, optionally in the form of cements, in an amount of 20 to 500 wt%, based on the weight of component b), optionally in addition to other inorganic auxiliary substances and additives, is used as the inorganic auxiliary substances and additives.

2. Process for the manufacture of coatings of polyurethane plastics according to Claim 1.

3. Process according to Claim 1 or 2, characterized in that
e) bituminous additives in an amount of up to 500 wt%, based on the weight of component b), optionally in addition to other organic auxiliary substances and additives, are used as organic auxiliary substances and additives.

4. Process according to Claims 1 to 3, characterized in that a mixture of polyisocyanates of the diphenylmethane series is used as polyisocyanate component a).

5. Process according to Claims 1 to 4, characterized in that d) sand, grit, pigments, carbon black and/or graphite are used as additional inorganic auxiliary substances and additives.

## Revendications

1. Procédé de préparation de matières plastiques en polyuréthanne très élastiques par réaction de :
a) un composant polyisocyanate avec
b) un composant polyol et
c) de l'eau
en présence de
d) des adjuvants et additifs inorganiques et éventuellement,
e) des adjuvants et additifs organiques à l'exception de la glycérine
caractérisé en ce que
a) on introduit le composant polyisocyanate en une quantité qui correspond à un indice d'isocyanate d'au moins 50,
b) on utilise essentiellement en tant que composant polyol une résine de polybutadiène fluide présentant des groupements hydroxyle terminaux dont la masse moléculaire est dans l'intervalle 500 à 10 000, l'utilisation de glycérine en tant que partie du composant b) étant exclue,
c) on utilise l'eau en une quantité de 10 à 50 % en masse par rapport à la masse de composant b) et
d) on utilise en tant qu'adjuvants ou additifs inorganiques au moins un hydroxyde ou oxyde de métal alcalin, le cas échéant sous forme de ciments en une quantité de 20 à 500 % en masse par rapport à la masse de composant b), le cas échéant en compagnie d'autres adjuvants ou additifs inorganiques.

2. Procédé de préparation de revêtements en matières plastiques en polyuréthanne selon la revendication 1.

3. Procédé selon la revendication 1 ou 2, caractérisé en ce que :
e) on utilise en tant qu'adjuvants ou additifs organiques des matières additionnelles bitumineuses en une quantité pouvant aller jusqu'à 500% en masse par rapport à la masse de composant b), éventuellement en compagnie d'autres adjuvants ou additifs organiques.

4. Procédé selon l'une des revendications 1 à 3, caractérisé en ce qu'on utilise en tant que composant polyisocyanate a) un mélange de polyisocyanates de la série du diphénylméthane.

5. Procédé selon l'une des revendications 1 à 4, caractérisé en ce qu'on utilise en tant qu'adjuvant ou additif inorganique d) du sable, du gravier, des pigments, de la suie et/ou du graphite.
